# EUROPÄISCHE PATENTSCHRIFT

(11) **EP 0 649 505 B1**
(45) Veröffentlichungstag und Bekanntmachung des Hinweises auf die Patenterteilung: **09.07.1997**
(21) Anmeldenummer: 93912800.5
(22) Anmeldetag: 27.05.1993
(51) Int. Cl.: F16J 15/00

(54) **WELLENDICHTUNG**
SHAFT SEAL
GARNITURE ETANCHE D'ARBRE

(30) Priorität: 01.07.1992 DE 4221521
(43) Veröffentlichungstag der Anmeldung: 26.04.1995
(73) Patentinhaber: Balzers und Leybold Deutschland Holding Aktiengesellschaft, 63450 Hanau (DE)
(72) Erfinder: ABELEN, Thomas, D-5000 Köln 90 (DE); ARNDT, Lutz, D-5210 Troisdorf (DE); KAISER, Winfried, D-7850 Lörrach (DE); VORBERG, Dieter, D-5042 Erftstadt-Lechenich (DE)
(74) Vertreter: Leineweber, Jürgen, Dipl.-Phys.
(86) Internationale Anmeldenummer: EP9301327
(87) Internationale Veröffentlichungsnummer: WO9401702

(56) Entgegenhaltungen:
- FR-A- 1 486 414
- GB-A- 850 767
- US-A- 2 590 422
- US-A- 4 359 228

## Beschreibung

Die Erfindung bezieht sich auf die Abdichtung einer Welle in einer Trennwand, die einen ölenthaltenden Raum von einem ölfreien Raum trennt, mit Hilfe von zwei Wellendichtringen. Wellendichtringe üblicher Bauart haben einen im wesentlichen C-förmigen Querschnitt. Ihre offene Seite ist dem Medium zugekehrt, dessen Austritt verhindert werden soll.

Die Abdichtung von Wellen mit Wellendichtringen dieser Art ist mit besonderen Problemen verbunden, wenn sich in den zu trennenden Räumen wechselnde Druckverhältnisse ausbilden (vgl. DE-OS 26 25 153). Dieses ist beispielsweise bei Rotationsvakuumpumpen der Fall, die ein Pumpengehäuse mit Schöpfraum und Rotor sowie einen das Pumpengehäuse umgebenden Ölkasten aufweisen. Zum Stand der Technik gehören weiterhin der Inhalt der FR-A-14 86 414 und GB-A-850 767. Die französische Schrift offenbart eine Wellendichtung mit zwei nebeneinanderliegenden Dichtringen, zwischen denen ein Abstand vorhanden ist. Die GB-Schrift beschreibt einen Dichtring, der wellenseitig mit einer fettgefüllten Aussparung ausgerüstet ist.

Bei vielen vakuumtechnischen Prozessen ist es erforderlich, den Druck im Ölkasten zu senken, das heißt, im Ölkasten einen Druck aufrechtzuerhalten, der unterhalb des Atmosphärendruckes (beispielsweise bei 50 mbar) liegt. Gleichzeitig muß verhindert werden, daß Umgebungsluft in den Ölkasten gelangt.

Der vorliegenden Erfindung liegt die Aufgabe zugrunde, eine einfache Wellendichtung der eingangs erwähnten Art zu schaffen, welche sowohl den Durchtritt von Öl in eine Richtung als auch den Durchtritt von Gas oder Luft in beide Richtungen verhindert.

Erfindungsgemäß wird diese Aufgabe dadurch gelöst, daß die beiden Wellendichtringe unmittelbar nebeneinander derart angeordnet sind, daß die geschlossenen Seiten der Ringe einander anliegen und daß der offenen Seite des dem ölfreien Raum zugewandten Dichtringes eine mit Fett gefüllte Kammer vorgelagert ist. Bei einer Wellendichtung dieser Art übernimmt der dem ölenthaltenden Raum zugewandte Dichtring in der üblichen Weise die Funktion, den Durchtritt von Öl und Gas, sofern sich im Ölkasten ein höherer Druck einstellt, zu verhindern. Gleichzeitig ist seine Schmierung durch das Öl sichergestellt. Der zweite Dichtring hat die Funktion, den Durchtritt von Umgebungsgas zu verhindern. Seine Schmierung ist durch die mit Fett gefüllte Kammer sichergestellt. Gleichzeitig hat der zweite Dichtring die Wirkung, den Durchtritt von Fett zu verhindern. Dadurch wird vermieden, daß zwischen den Wellendichtringen eine Fett/öl-Vermischung eintritt und daß Fett aus der Fettkammer in den ölenthaltenden Raum gelangt. Die unterschiedlichen Schmiermedien sind deshalb zuverlässig und dauerhaft voneinander getrennt.

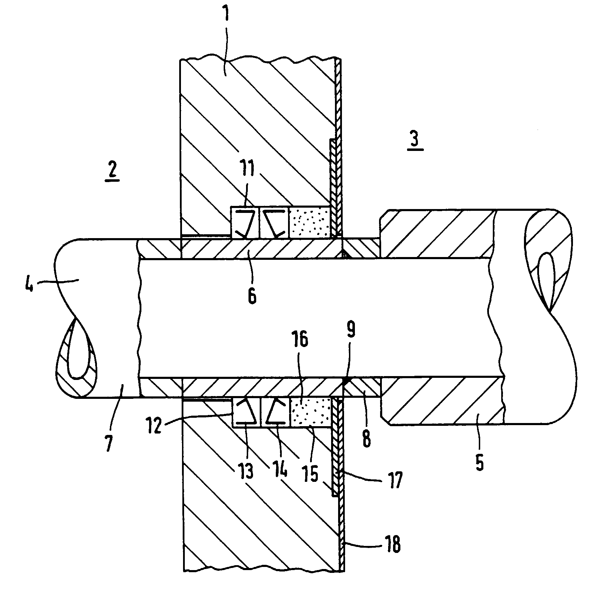

Weitere Vorteile und Einzelheiten der Erfindung sollen anhand eines in der Figur dargestellten Ausführungsbeispieles erläutert werden.

In der Figur ist mit 1 eine Trennwand, beispielsweise die Wandung des Ölkastens einer Vakuumpumpe, bezeichnet. Die Trennwand 1 trennt einen ölenthaltenden Raum 2, beispielsweise das Innere des Ölkastens, von einem ölfreien Raum 3, beispielsweise die Umgebung des Ölkastens, ab. Die die Trennwand 1 durchsetzende Welle 4 verbindet einen nicht dargestellten Rotor mit einem ebenfalls nicht dargestellten Motor. Ein Kupplungsbauteil 5, das auf der ölfreien Seite der Trennwand 1 angeordnet ist, ist nur teilweise dargestellt.

Im Bereich der Trennwand 1 ist die Welle 4 mit einer Laufbuchse 6 ausgerüstet, die von Distanzringen 7 und 8 in ihrer Position gehalten wird. Zur Abdichtung des Spaltes zwischen Welle 4 und Laufbuchse 6 dient der Dichtring 9.

In der Trennwand 1 ist eine ringförmige Aussparung 11 vorgesehen, die - ohne die die erfindungsgemäße Wellendichtung bildenden Bauteile - zum ölfreien Raum 3 hin offen ist. Von der durch die Aussparung 11 gebildeten, dem ölenthaltenden Raum 2 zugewandten Stufe 12 wird der erste Dichtring 13 in seiner Position gehalten. Seine offene Seite ist dem ölenthaltenden Raum 2 zugewandt, so daß er die Funktion, den Durchtritt von Öl zu verhindern, erfüllt. Der geschlossenen Seite des Dichtringes 13 liegt der Dichtring 14 an, und zwar ebenfalls mit seiner geschlossenen Seite. Der offenen Seite des Dichtringes 14 ist eine ringförmige Kammer 15 zugeordnet, die mit Fett 16 gefüllt ist. Zum ölfreien Raum 3 bzw. zur Umgebung hin ist die Kammer 15 mit Hilfe einer fusselfreien Filz-Ringscheibe 17 verschlossen, die mit ihrer Innenkante der Laufbuchse 6 anliegt und damit den Austritt von Fett 16 verhindert. Zur Sicherung der Lage der Filzscheibe 17 dient ein Halteblech 18, das in nicht näher dargestellter Weise auf der Trennwand 1 befestigt ist.

Es wurde eine schematische Darstellung für die Dichtringe 13 und 14 gewählt. Bei praktischen Ausführungsformen ist auch das innere des Dichtringes 14 mit Fett 16 gefüllt.

Wie bereits erwähnt, hat der Dichtring 13 u.a. die Funktion, den Durchtritt von Öl zu verhindern. Seine Schmierung ist durch das Öl sichergestellt. Der Dichtring 14 hat die Aufgabe, den Eintritt von Gas in den ölenthaltenden Raum 2 zu verhindern. Seine Schmierung ist durch das Fett sichergestellt. Gleichzeitig verhindert der Dichtring 14 den Durchtritt des Fettes selbst, so daß Fett/ Öl-Vermischungen nicht eintreten.

## Patentansprüche

1. Dichtung für eine Welle (4) in einer Trennwand (1), die einen ölenthaltenden Raum (2) von einem ölfreien Raum (3) trennt, mit Hilfe von zwei Wellendichtringen (13, 14), dadurch gekennzeichnet, daß die Wellendichtringe (13, 14) unmittelbar nebeneinander derart angeordnet sind, daß ihre geschlossenen Seiten einander anliegen, und daß der offenen Seite des dem ölfreien Raum (3) zugewandten Dichtringes (14) eine mit Fett (16) gefüllte Kammer (15) vorgelagert ist.

2. Wellendichtung nach Anspruch 1, dadurch gekennzeichnet, daß sich die Wellendichtringe (13, 14) und die Fettkammer (15) innerhalb einer die Welle (4) umgebenden, ringförmigen Aussparung (11) in der Trennwand (1) befinden.

3. Wellendichtung nach Anspruch 2, dadurch gekennzeichnet, daß die Aussparung (11) zum ölfreien Raum (3) hin offen ist und daß für die dem ölfreien Raum (3) zugewandte, der Aufnahme von Fett (16) dienende Kammer (15) eine Abdeckung (17, 18) vorgesehen ist.

4. Wellendichtung nach Anspruch 3, dadurch gekennzeichnet, daß die Abdeckung eine Filzscheibe (17) umfaßt.

5. Wellendichtring nach Anspruch 4, dadurch gekennzeichnet, daß ein die fusselfreie Filzscheibe (17) in ihrer Position sicherndes Halteblech (18) vorgesehen ist.

## Claims

1. Sealing for a shaft (4) in a partition wall (1), which separates an oil-containing area (2) from an oil-free area (3), with the aid of two shaft sealing rings (13, 14), characterized in that the shaft sealing rings (13, 14) are disposed directly next to one another in such a way that their closed sides lie adjacent to one another, and that disposed in front of the open side of the sealing ring (14) directed towards the oil-free area (3) is a chamber (15) filled with grease (16).

2. Shaft seal according to claim 1, characterized in that the shaft sealing rings (13, 14) and the grease chamber (15) are situated inside an annular recess (11) in the partition wall (1) which surrounds the shaft (4).

3. Shaft seal according to claim 2, characterized in that the recess (11) is open towards the oil-free area (3) and that a cover (17, 18) is provided for the chamber (15), which is directed towards the oil-free area (3) and used to receive grease (16).

4. Shaft seal according to claim 3, characterized in that the cover comprises a felt washer (17).

5. Shaft sealing ring according to claim 4, characterized in that a retaining plate (18) for fixing the fuzz-free felt washer (17) in position is provided.

## Revendications

1. Garniture d'étanchéité pour arbre (4), montée dans une cloison (1) qui sépare un espace (2) contenant de l'huile d'un espace (3) sans huile, et utilisant deux bagues d'étanchéité d'arbre (13, 14), caractérisée en ce que les bagues d'étanchéité d'arbre (13, 14) sont disposées directement l'une à côté de l'autre de telle manière que leurs côtés fermés soient en appui l'un contre l'autre et en ce qu'en avant du côté ouvert de la bague d'étanchéité (14) dirigée vers l'espace sans huile (3) est placée une chambre (15) remplie de graisse (16).

2. Garniture d'étanchéité d'arbre selon la revendication 1, caractérisée en ce que les bagues d'étanchéité d'arbre (13, 14) et la chambre à graisse (15) se trouvent à l'intérieur d'un évidement annulaire (11) de la cloison (1) qui entoure l'arbre (4).

3. Garniture d'étanchéité d'arbre selon la revendication 2, caractérisée en ce que l'évidement (11) est ouvert sur la chambre sans huile (3) et en ce qu'il est prévu une fermeture (17, 18) pour la chambre (15) dirigée vers l'espace sans huile (3) qui sert à contenir la graisse (16.

4. Garniture d'étanchéité d'arbre selon la revendication 3, caractérisée en ce que la fermeture comprend une rondelle de feutre (17).

5. Garniture d'étanchéité d'arbre selon la revendication 4, caractérisée en ce qu'il est prévu une plaque de retenue (18) qui maintient la rondelle de feutre non pelucheuse (17) dans sa position.
